# FASCICULE DE BREVET EUROPEEN

(11) **EP 1 316 778 B1**
(45) Date de publication et mention de la délivrance du brevet: **25.07.2007**
(21) Numéro de dépôt: 01811164.1
(22) Date de dépôt: 30.11.2001
(51) Int. Cl.: G01B 7/012

(54) **Palpeur à déclenchement et procédé d'assemblage d'un palpeur à déclenchement**
Tastsonde und Verfahren zu deren Zusammensetzung
Touch probe and method of assembling a touch probe

(43) Date de publication de la demande: 04.06.2003
(73) Titulaire: TESA SA, 1020 Renens (CH)
(72) Inventeur: Jordil, Pascal, 1612 Ecoteaux (CH); Rouge, Claude, 1197 Prangins (CH); Zanier, Adriano, 1008 Prilly (CH)
(74) Mandataire: P&TS Patents & Technology Surveys SA

(56) Documents cités:
- EP-A- 0 764 827
- DE-A- 3 325 287
- DE-A- 19 738 736
- US-A- 4 270 275
- US-A- 4 859 817

## Description

La présente invention concerne un palpeur à déclenchement, utilisé habituellement sur une machine à mesurer et servant à détecter le contact entre la touche du palpeur et une pièce à mesurer. La présente invention concerne également un procédé d'assemblage d'un tel palpeur.

Les palpeurs à déclenchement sont des éléments de mesure électromécaniques utilisés largement, mais pas uniquement, sur les lignes de production de pièces mécaniques, par exemple pour le réglage des machines de production ou pour les contrôles de qualité. Ils servent à la vérification précise de dimensions, ou au contrôle de la régularité d'une surface ou d'un lot de production.

Les palpeurs à déclenchement sont habituellement fixés sur le bras mobile d'une machine à mesurer dont la position est déterminée avec précision à l'aide de systèmes de mesure par exemple capacitifs, inductifs, magnétorésistifs ou optoéléctroniques. Le bras de la machine à mesurer est déplacé dans l'espace selon une trajectoire déterminée jusqu'à ce que la touche du palpeur entre en contact avec la pièce ou la surface à mesurer. Lors du contact, une force de déflexion est appliquée sur la touche, la sortant ainsi de sa position initiale de repos. Un circuit électrique est alors soit fermé, soit ouvert et un signal est généralement envoyé d'une part à l'utilisateur, par exemple sous forme de signal lumineux, d'autre part au logiciel de la machine à mesurer qui détermine ainsi, à l'aide des données du système de mesure, les coordonnées du point de contact dans un référentiel donné. Le logiciel permet ensuite de calculer la distance entre deux points de mesure et, dans certains cas, de représenter un objet à mesurer en deux ou trois dimensions à l'aide d'une série de points de mesure.

Dans une autre application les palpeurs à déclenchement servent au contrôle de la régularité d'une surface ou d'un lot de production. Un palpeur est fixé sur un élément immobile et une surface ou une série de pièces défile devant le palpeur de façon à effleurer la touche. Si la surface présente des irrégularités ou si les pièces ne sont pas de dimension régulière, la touche du palpeur sera soumise à une force qui la fera sortir de sa position de repos, modifiant ainsi le signal émis par le circuit électrique du palpeur.

Les éléments principaux d'un palpeur à déclenchement sont habituellement un organe fixe, une touche et un circuit électrique.

L'organe fixe est fixe par rapport à l'élément de fixation, l'élément de fixation étant généralement incorporé au boîtier du palpeur et permettant de fixer le palpeur, par exemple sur le bras mobile d'une machine à mesurer.

La touche est l'élément mécanique destiné à entrer en contact avec la surface ou la pièce à mesurer. La touche est maintenue par un élément élastique dans une position de repos par rapport à l'organe fixe. Cette position de repos est déterminée et reproductible. La touche possède un ou plusieurs degrés de liberté par rapport à l'organe fixe. Lors du contact avec la surface à mesurer, une force de déflexion est exercée sur la touche qui sort de sa position de repos suivant un ou plusieurs de ses degrés de liberté par rapport à l'organe fixe. Lorsque la force n'est plus appliquée sur la touche, cette dernière retourne dans sa position de repos.

Le circuit électrique sert à la détection des mouvements de la touche par rapport à sa position de repos. Le circuit électrique possède au moins un interrupteur qui est dans un certain état, fermé ou ouvert, lorsque la touche est en position de repos et dans l'état opposé lorsque la touche est en déflexion par rapport à cette position de repos. Les variations de l'impédance du circuit électrique sont détectées et traitées par un circuit de traitement des signaux qui transmet ensuite l'information à un utilisateur ou, le cas échéant, à un logiciel de calcul qui traitera l'information en combinaison avec les données d'un système de mesure.

La précision et la rapidité avec laquelle un contact entre la touche et une surface ou une pièce à mesurer est détecté dépend pour une part importante de la précision et de la rapidité avec laquelle la variation de l'impédance du circuit électrique est détectée et traitée par le circuit de traitement des signaux. Mais elle dépend également de la qualité de fabrication des éléments du palpeur, de la précision de leur assemblage et de leur tenue dans le temps.

On comprendra donc aisément que le positionnement et la fixation des éléments de contact des interrupteurs jouent un rôle essentiel dans cette précision.

Les éléments de contact sont en général constitués d'éléments sphériques conducteurs dont la mise en place dans leur support sur l'organe fixe est une opération longue et délicate, et par conséquent coûteuse.

US-4270275 propose par exemple un palpeur à déclenchement dans lequel les éléments de contact des interrupteurs sont constitués de billes en matière conductrice collées, par exemple à l'aide de résine d'époxy, dans un logement de l'organe fixe. Les éléments de connexion complétant le circuit électrique sont des conducteurs souples connectant en série les interrupteurs. Le document ne précise pas de quelle manière le contact est assuré entre les billes et les conducteurs souples. Dans le cas où les conducteurs souples sont soudés ou collés aux billes avant l'assemblage, ils risquent de se désolidariser des billes ou de se casser lors des manipulations d'assemblage et il est difficile de garantir que le point de fixation entre la bille et le conducteur souple soit orienté correctement à la fin de l'opération. De plus, le soudage d'un fil de cuivre sur une bille en métal dur est malaisé et le collage est peu fiable. Si les fils sont simplement maintenus en contact avec les billes dans la colle, la qualité du contact est malaisée à garantir et les fils souples peuvent à l'usage se casser ou sortir de leur logement et ainsi perdre le contact avec les billes. Par conséquent, quelle que soit la solution envisagée, il s'agit d'une opération ou d'une suite d'opérations délicates augmentant sensiblement le prix du palpeur.

US-6275053 tente de remédier à ces problèmes en proposant des éléments de contact constitués de billes insérées dans des logements de profondeur déterminée dans l'organe fixe et maintenues dans ces logements par le boîtier du palpeur à déclenchement. Les interrupteurs ainsi constitués sont connectés en série par des éléments de connexion flexibles compressés entre la bille et le boîtier. Une telle exécution présente toutefois plusieurs inconvénients majeurs.

Tout d'abord, les logements des billes sont de forme complexe car ils doivent être suffisamment fermés pour maintenir la bille en position et suffisamment ouverts pour que la bille soit contactée d'un côté par un élément conducteur fermant l'interrupteur lorsque la touche est en position de repos et de l'autre côté par l'élément de connexion flexible complétant le circuit. Les dimensions des logements, en particulier leur profondeur, doivent également être suffisamment précises pour que, après le montage du boîtier, la bille ne puisse plus bouger dans son logement et qu'elle exerce une pression suffisante pour établir un bon contact avec l'éléments de connexion flexible. Pour ces raisons, la fabrication de l'organe fixe d'un palpeur tel que décrit selon différentes variantes dans le brevet US-6275053 est coûteuse et délicate.

L'assemblage d'un tel palpeur est également une opération délicate, car tous les éléments du circuit électrique doivent être précisément alignés afin que ce dernier soit correctement constitué et fonctionnel.

De plus, le contact entre la bille et l'élément de connexion flexible étant effectué par simple pression, la bille et/ou l'élément de connexion auront tendance, avec le temps, à s'oxyder à leur point de contact, modifiant ainsi l'impédance du circuit électrique jusqu'à finalement empêcher le bon fonctionnement du palpeur.

La présente invention propose un palpeur à déclenchement dont l'assemblage est grandement facilité par le fait que certains éléments de connexion rigides constituant le circuit électrique sont directement solidaires des éléments de contact des interrupteurs et participent au positionnement de ces éléments de contact. Lors de l'assemblage, les éléments de contacts sont maintenus dans un outil de montage à l'aide des éléments de connexion, permettant ainsi leur positionnement et leur fixation en une seule opération. Le palpeur proposé par la présente invention évite également les problèmes d'oxydation aux points de contact, par le fait que les éléments de contact sont soudés aux éléments de connexion.

Cet objet est atteint par un palpeur comprenant les caractéristiques de la revendication 1, et par un procédé d'assemblage selon la revendication 7 ; des variantes préférentielles sont l'objet des revendications dépendantes.

US-4859817 décrit un palpeur dans lequel l'élément mobile comporte quatre sphères portées par des tiges rigides et appuyant sur six plans inclinés définissant une position répétable. Ce dispositif comporte cependant une asymétrie qui entraîne une réponse non uniforme aux forces de contact de différentes orientations.

DE-3325287 décrit un palpeur dans lequel l'organe mobile est connecté à un disc soutenu par trois tiges à tête emisphérique. La perte de contact d'une tige est révélée par un circuit à micro-ondes.

DE-19738763 décrit un palpeur dans lequel les connexions entre les sphères d'appui sont assurées par un anneau conducteur ou par une fine couche conductrice sur un anneau en céramique.

La présente invention sera mieux comprise à la lecture de la description donnée à titre d'exemple et illustrée par les figures annexées.

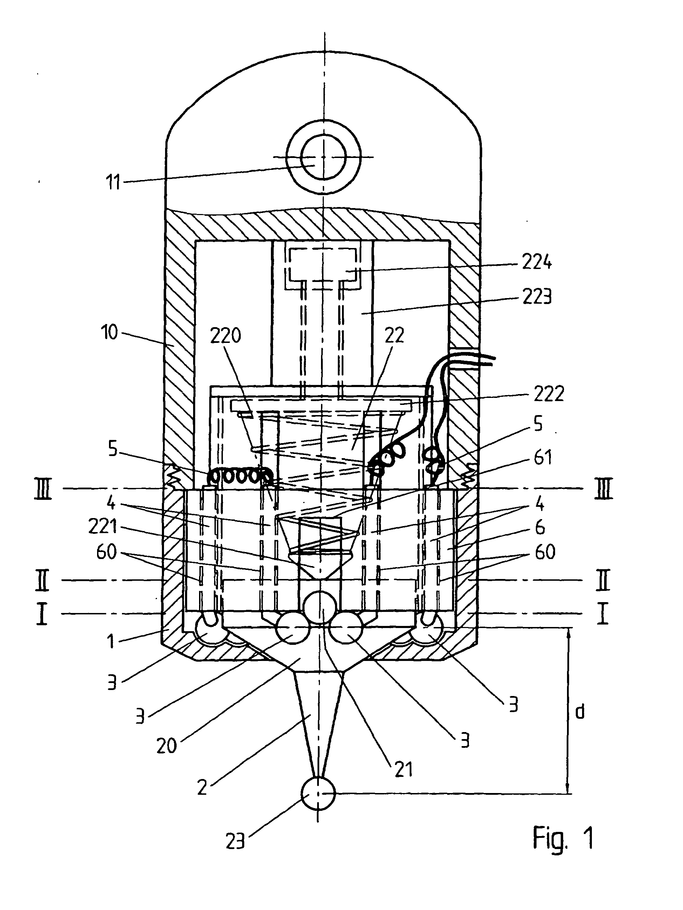

La figure 1 représente une vue des éléments principaux d'une variante préférentielle de l'invention.

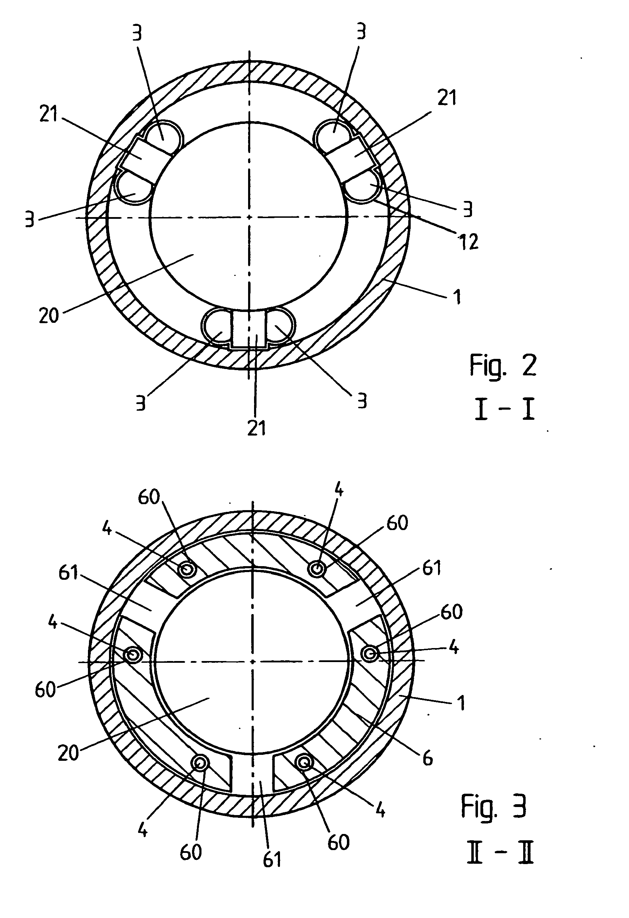

La figure 2 représente une coupe de la vue de la figure 1 selon un axe I-I.
La figure 3 représente une coupe de la vue de la figure 1 selon un axe II-II.

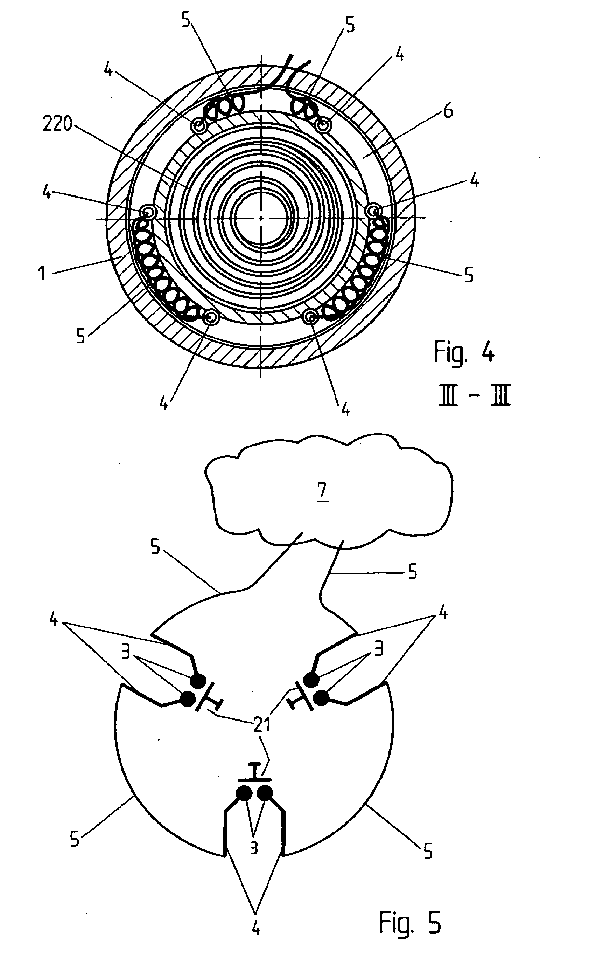

La figure 4 représente une coupe de la vue de la figure 1 selon un axe III-III.
La figure 5 représente un schéma de principe du circuit électrique du palpeur.

La variante préférentielle de l'invention est un palpeur à déclenchement construit sur le principe de la liaison de Boys dont la touche 2, sous l'action d'une force de déflexion extérieure, peut être défléchie de sa position de repos dans les trois dimensions d'un référentiel donné.

Un tel palpeur à déclenchement possède les éléments principaux suivants : - une touche 2
- un support de touche 20
- un organe fixe 1 faisant partie du boîtier
- un mécanisme de maintien 22
- un organe de guidage 6
- un circuit électrique (Fig. 5)

La touche 2 est constituée d'une pièce allongée selon un axe et terminée par une sphère dont la position du centre géométrique est parfaitement répétitive.

Le support de touche 20 est destiné à supporter la touche 2. La touche 2 est vissée sur le support de touche et peut être ainsi changée facilement suivant les applications ou en cas d'endommagement. Le support de touche 20 est également construit géométriquement autour d'un axe et lorsque la touche 2 est vissée sur le support de touche 20, les axes des deux parties sont alignés. Le support de touche 20 comporte trois goupilles 21 en matière conductrice et isolées entre elles. Les goupilles 21 sont fixées dans des trous perpendiculaires à l'axe du support de touche 20 et répartis à intervalles réguliers sur sa circonférence. Dans une première variante le support de touche 20 est construit en matière isolante, entraînant l'isolation des goupilles 21 entre elles. Dans une seconde variante, le support de touche 20 est construit en matière conductrice, par exemple en aluminium, et chaque goupille 21 est isolée par éloxage du support de touche 20 ou par ajout d'une matière isolante avant ou lors de leur fixation.

L'organe fixe 1 est fixe par rapport à l'élément de fixation 11 permettant de fixer le palpeur, par exemple, au bras mobile d'une machine à mesurer. Ainsi, la position de l'organe fixe 1 relativement à l'élément de fixation et par extension au bras de la machine à mesurer, par exemple, est fixe. L'organe fixe 1 comporte six logements destinés à recevoir chacun un élément de contact 3. Afin de détecter rapidement les moindres mouvements de la touche, ces logements sont situés le plus près possible de la bille 23 de la touche 2, diminuant ainsi la distance d. Pour des raisons de précision de fabrication, l'organe fixe 1 est construit de préférence en aluminium et est ensuite éloxé afin d'assurer une bonne isolation électrique entre les éléments de contact.

Le mécanisme de maintien 22 est constitué d'un ressort 220 légèrement sous tension appuyant d'un côté sur un couvercle 22, terminé à l'autre extrémité par une pièce conique 221 appuyant sur le centre du support de touche 20, permettant de centrer ce dernier et de le maintenir dans sa position de repos. La tension du ressort 220 peut être réglée à l'aide de la vis 224 qui permet de modifier la position du couvercle 222 par rapport au couvercle 223.

L'organe de guidage 6 est fabriqué en matière isolante. Il est essentiellement cylindrique et permet de loger le support de touche 20 et le mécanisme de maintien 22 servant au maintien de la touche 2 dans sa position de repos. Trois découpes 61 sont réparties dans la circonférence de l'organe de guidage 6 afin de loger les goupilles 21 du support de touche 20 et de guider leur mouvement lors de l'application d'une force de déflexion sur la touche 2. De chaque côté de chaque découpe 61 se trouve un orifice 60 prévu pour le logement d'un élément de connexion 4.

Le circuit électrique d'un palpeur à déclenchement construit selon le principe de la liaison de Boys comporte six points de contact montés en série électriquement. Ces six points de contact peuvent être vus comme trois interrupteurs tels que représentés dans la figure 5, comprenant chacun deux éléments de contact 3 et un contacteur, matérialisé dans la variante préférentielle de l'invention par une des goupilles 21 du support de touche 20. Les interrupteurs sont reliés entre eux par des éléments de connexion 4 rigides et des conducteurs souples 5 selon le schéma de la figure 5. Les éléments de contact 3 des interrupteurs sont des billes métalliques. Chaque élément de contact 3 est soudé à un élément de connexion 4 formé d'une tige métallique rigide et éventuellement légèrement coudée près de l'élément de contact 3. La soudure des éléments de connexion 4 sur les éléments de contact 3 est faite de préférence par brasure, c'est-à-dire à l'aide d'un métal d'apport fondu à la flamme dont le point de fusion est inférieur à celui des éléments à assembler. L'élément de contact 3 et l'élément de connexion 4 peuvent également être deux parties d'une pièce usinée en une seule opération.

Lors de l'assemblage du palpeur, une goutte de colle, par exemple de résine d'époxy, est déposée dans chaque logement d'élément de contact 12. Les éléments de connexion soudés aux éléments de contact sont maintenus sur un outil de montage non représenté, de construction similaire à celle de l'organe de guidage 6. L'outil de montage comporte des logements cylindriques disposés identiquement aux orifices 60 de l'élément de guidage 6. Les éléments de connexion 4 sont insérés et maintenus dans ces logements, déterminant ainsi la position des éléments de contact. L'outil de montage est ensuite glissé dans l'organe fixe afin d'amener chaque élément de contact dans son logement et de l'y maintenir jusqu'au séchage complet de la colle. L'outil de montage permet ainsi, grâce aux éléments de connexion 4 rigides, le guidage et le maintien lors du collage des six éléments de contacts simultanément. La position des billes est ainsi définie précisément par les logements ; des goupilles provisoires, similaires aux goupilles définitives 21, peuvent être utilisées pendant le collage.

Une fois la colle séchée, l'outil de montage est retiré. Le support de touche 20 est inséré dans l'organe de guidage 6, la position du support de touche 20 étant déterminée par le placement des goupilles 21 dans les découpes 61. L'organe de guidage est ensuite disposé à la place de la pièce de montage, les éléments de connexion 4 étant de ce fait insérés dans les orifices 60. Le circuit électrique est complété par soudure de conducteurs souples 5 sur les extrémités des éléments de connexion 4 opposées aux éléments de contacts 3 suivant le schéma de la figure 5. Le mécanisme de maintien 22 est ensuite monté par application du ressort contre le support de touche 20 et fermeture du couvercle de l'organe de guidage 6. La tension du ressort 220 est réglée par la vis 224. Finalement, l'assemblage est complété par vissage du haut du boîtier 10.

Lorsque la touche 2 est en position de repos, chacune des trois goupilles 21 est en contact avec les deux éléments de contact 3 obturant partiellement la découpe 61 dans laquelle elle peut se déplacer, fermant ainsi chaque interrupteur. Le circuit électrique est fermé.

En cas d'application d'une force de déflexion sur la touche 2, cette dernière quitte sa position de repos, ce qui a pour effet qu'au moins une des trois goupilles 21 du support de touche 20 se déplace dans la découpe 61 qui lui sert de guide et se détache des éléments de contact 3 correspondants, ouvrant ainsi au moins un interrupteur. Le circuit électrique est alors ouvert, ce qui est détecté et traité par le circuit de traitement du signal.

Lorsque la force de déflexion n'est plus exercée sur la touche 2, cette dernière revient dans sa position de repos sous l'action du mécanisme de maintien 22, refermant ainsi tous les interrupteurs. Le circuit électrique est à nouveau fermé.

Dans une deuxième variante, les conducteurs souples 5 sont remplacés par des conducteurs flexibles non représentés appliqués par pression contre l'extrémité des éléments de connexion et maintenus en position par le haut du boîtier 10.

Dans une troisième variante, la connexion entre deux interrupteurs adjacents est assurée par un seul élément de connexion rigide possédant à chacune de ses extrémités un élément de contact d'un des interrupteurs qu'il relie. Cette variante évite la soudure de conducteurs souples 5 et réduit ainsi le nombre d'opérations nécessaires à l'assemblage.

Lors de l'assemblage d'un palpeur selon l'invention, le positionnement et la fixation des éléments de contact 3 sont grandement facilités par la rigidité des éléments de connexion 4 qui permet à un outil de montage adapté de les placer facilement dans leurs logements sur l'organe fixe 1, même si ces logements sont difficilement accessibles de par leur position au fond de l'organe fixe 1.

Tous les éléments du circuit électrique, à part les goupilles 21 qui ferment et ouvrent les interrupteurs, sont soudés entre eux. Par conséquent, les risques d'oxydation aux points de contact entraînant l'altération de la qualité du circuit électrique sont éliminés, ce qui prédispose un tel palpeur à une durée de vie importante.

Les variantes ci-dessus décrivent toutes un palpeur à déclenchement tridimensionnel. L'homme du métier comprendra toutefois que le principe de l'invention peut s'appliquer aussi à des palpeurs à déclenchement bi- ou unidimensionnels.

Dans une autre variante de l'invention, le palpeur à déclenchement possède un circuit électrique dont les interrupteurs sont montés en parallèle électriquement et sont tous ouverts lorsque la touche est en position de repos. Lorsque la touche est sortie de sa position de repos sous l'action d'une force de déflexion, au moins un des interrupteurs est fermé, changeant ainsi l'impédance du circuit électrique.

## Revendications

1. Palpeur comprenant:
un organe fixe (1) ;
une touche (2) maintenue par un élément élastique dans une position de repos par rapport audit organe fixe, ladite position de repos pouvant être reproduite, ladite touche (2) pouvant se déplacer à partir de ladite position de repos en réponse à une force de déflexion et pouvant retourner à ladite position de repos lorsque ladite force cesse d'être appliquée, ledit palpeur étant construit selon le principe de la liaison de Boys;
des éléments de contact arrangés sur ledit organe fixe (3) et des élément de contact arrangé sur ladite touche (21), lesdits éléments de contact (3, 21) se touchant en six points de contact dans ladite position de repos, un circuit électrique dans lequel lesdits six points de contact forment trois interrupteurs montés en série électriquement reliés par des éléments de connexion (4, 5), lesdits trois interrupteurs étant fermés ou ouverts lorsque ladite touche (2) est dans ladite position de repos et dans l'état opposé lorsque ladite touche (2) est en déflexion par rapport à ladite position de repos, lesdits éléments de contact arrangés sur l'organe fixe (3) comprenant des billes métalliques
**caractérisé en ce que** au moins un desdits éléments de connexion (4) est constitué d'une tige métallique rigide solidaire d'au moins un desdits éléments de contact arrangés sur l'organe fixe (3).

2. Palpeur selon la revendication 1, ledit au moins un élément de connexion (4) étant soudé ou brasé audit au moins un élément de contact (3).

3. Palpeur selon la revendication 1 ou 2, ledit au moins un élément de connexion (4) et ledit au moins un élément de contact (3) constituant deux parties d'une même pièce usinée en une seule opération.

4. Palpeur selon l'une des revendications précédentes, ledit circuit électrique étant complété par des conducteurs électriques souples (5) soudés sur lesdits éléments de connexion (4).

5. Palpeur selon l'une des revendications précédentes, ledit circuit électrique étant complété par des ressorts en matière conductrice appliqués par pression contre lesdits éléments de connexion (4).

6. Palpeur selon l'une des revendications précédentes, au moins un desdits éléments de connexion (4) comportant un élément de contact (3) solidaire à chacune de ses extrémités.

7. Procédé d'assemblage d'un palpeur selon la revendication 1, le procédé d'assemblage comprenant une étape de mise en place d'au moins un élément de contact (3) sur l'organe fixe (1) à l'aide d'au moins un élément de connexion (4) du circuit électrique formé d'une tige métallique rigide.

8. Procédé d'assemblage selon la revendication précédente, ladite mise en place du au moins un élément de contact (3) étant effectuée à l'aide d'un outil de montage maintenant le au moins un élément de connexion (4) dans une position permettant d'insérer le au moins un élément de contact (3) dans un logement (12).

## Claims

1. Probe, comprising:
a fixed component (1),
a stylus (2) held by a flexible element in a resting position relative to said fixed component, said resting position being reproducible, said stylus (2) being capable of moving from said resting position in response to a deflecting force and of moving back to said resting position when said force is no longer applied, said probe being built according to the principle of the Boys connection;
contact elements (3) arranged on said fixed component and contact elements (21) arranged on said stylus, wherein said contact elements (3, 21) touch each other at six contact points in said resting position, an electric circuit where said six contact points form three switches mounted serially and connected by connecting elements (4, 5), wherein said three switches are closed or open when said stylus (2) is in said resting position and in the opposite state when said stylus (2) is deflected relative to said resting position, said contact elements (3) arranged on the fixed organ comprising metallic balls,
**characterized in that** said at least one of said connecting element (4) is constituted of a rigid metallic rod united with at least one of said contact elements (3) arranged on the fixed element.

2. Probe according to claim 1, said at least one connecting element (4) being welded or brazed to said at least one contact element (3).

3. Probe according to claim 1 or 2, said at least one connecting element (4) and said at least one contact element (3) constituting two parts of a same piece machined in a single operation.

4. Probe according to one of the preceding claims, said electric circuit being completed by flexible electric conductors (5) welded onto said connecting elements (4).

5. Probe according to one of the preceding claims, said electric circuit being completed by springs of conductive material applied through pressure against said connecting elements (4).

6. Probe according to one of the preceding claims, at least one of said connecting elements (4) comprising a united contact element (3) at each of its extremities.

7. Method for assembling a probe according to claim 1, the assembly method comprising a step of mounting at least one contact element (3) on the fixed component (1) by means of at least one connecting element (4) of the electric circuit constituted of a rigid metallic rod.

8. Assembly method according to the preceding claim, said mounting of the at least one contact element (3) being performed by means of an assembly tool holding the at least one connecting element (4) in a position enabling the at least one contact element (3) to be inserted into its lodging.

## Patentansprüche

1. Tastsonde mit:
einem festen Organ (1);
einem Fühlstift (2), der durch ein elastisches Element in einer Ruheposition in Bezug auf das besagte feste Organ gehalten wird, wobei die besagte Ruheposition reproduzierbar ist, wobei der besagte Fühlstift (2) sich aus der besagten Ruheposition in Antwort auf eine Deflektionskraft bewegen kann und in diese besagte Ruheposition zurückkehren kann, wenn die besagte Kraft nicht mehr angewandt wird, wobei die besagte Tastsonde gemäss dem Prinzip der Boysverbindung gebaut wird;
auf dem besagten festen Organ angeordneten Kontaktelementen (3) und auf dem besagten Fühlstift angeordneten Kontaktelementen (21), wobei sich die besagten Kontaktelemente (3, 21) in der Ruheposition an sechs Kontaktpunkten berühren, einem elektrischen Schaltkreis, in welchem die besagten sechs Kontaktpunke drei seriell montierte Schaltungen bilden, welche durch Verbindungselemente (4, 5) verbunden sind, wobei die besagten drei Schaltungen geschlossen oder geöffnet sind, wenn sich der besagte Fühlstift (2) in der Ruheposition befindet, und im entgegensetzten Zustand, wenn der besagte Fühlstift (2) in Bezug auf die besagte Ruheposition deflektiert wird, wobei die besagten auf dem besagten festen Organ angeordneten Kontaktelemente (3) metallische Kugeln umfassen,
**dadurch gekennzeichnet, dass** mindestens eines der besagten Verbindungselemente (4) aus einem rigiden metallischen Stift besteht, der mit mindestens einem der besagten auf dem besagten festen Organ angeordneten Kontaktelementen (3) solidarisch verbunden ist.

2. Tastsonde gemäss dem Anspruch 1, wobei das besagte mindestens eine Verbindungselement (4) auf dem mindestens einem Kontaktelement (3) geschweisst oder hartgelötet ist.

3. Tastsonde gemäss dem Anspruch 1 oder 2, wobei das besagte mindestens eine Verbindungselement (4) und das besagte mindestens eine Kontaktelement (3) zwei Teile eines und desselben, in einem einzigen Arbeitsgang maschinell bearbeiteten Stücks bilden.

4. Tastsonde gemäss einem der vorhergehenden Ansprüche, wobei der besagte elektrische Schaltkreis mit flexiblen elektrischen Leitern (5) vervollständigt wird, die auf den besagten Verbindungselementen (4) geschweisst sind.

5. Tastsonde gemäss einem der vorhergehenden Ansprüche, wobei der besagte elektrische Schaltkreis mit Federn aus leitendem Material vervollständigt wird, die mit Druck gegen die besagten Verbindungselemente (4) aufgedrückt werden.

6. Tastsonde gemäss einem der vorhergehenden Ansprüche, wobei mindestens eines der besagten Verbindungselemente (4) ein solidarisches Kontaktelement (3) an jeder seiner Extremitäten umfasst.

7. Verfahren zur Zusammensetzung einer Tastsonde gemäss Anspruch 1, wobei das Zusammensetzungsverfahren einen Schritt der Anordnung von mindestens einem Kontaktelement (3) auf dem festen Organ (12) mittels mindestens eines aus einem rigiden metallischen Stift bestehenden Verbindungselements (4) des elektrischen Schaltkreises umfasst.

8. Zusammensetzungsverfahren gemäss dem vorhergehenden Anspruch, wobei die besagte Anordnung von mindestens einem Kontaktelement (3) mit Hilfe eines Montagewerkzeugs durchgeführt wird, welches das mindestens eine Verbindungselement (4) in einer Position hält, die das Einfügen des mindestens einen Kontaktelement (3) in eine Unterbringung (12) erlaubt.
